(19) **Europäisches Patentamt / European Patent Office / Office européen des brevets**

(11) **EP 4 181 239 A1**

(12) # EUROPEAN PATENT APPLICATION

(43) Date of publication:
**17.05.2023 Bulletin 2023/20**

(21) Application number: **21208274.7**

(22) Date of filing: **15.11.2021**

(51) International Patent Classification (IPC):
**H01M 4/86** (2006.01)      **H01M 4/90** (2006.01)
**H01M 8/1018** (2016.01)      **H01M 8/18** (2006.01)

(52) Cooperative Patent Classification (CPC):
**H01M 4/86; H01M 4/90; H01M 8/1018; H01M 8/188**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Litricity GmbH**
**83080 Oberaudorf (DE)**

(72) Inventors:
• **Stimming, Prof. Dr. Ulrich**
  **83080 Oberaudorf (DE)**
• **Diekmann, Dr. Marc Henning**
  **82166 Gräfelfing (DE)**

(74) Representative: **Mooser, Sebastian Thomas**
**Wuesthoff & Wuesthoff**
**Patentanwälte PartG mbB**
**Schweigerstraße 2**
**81541 München (DE)**

(54) **ELECTROCHEMICAL CELL**

(57) The present invention relates to an electrochemical cell for electrical energy storage (EES), which is capable of operating in an electrical energy delivery mode in which it generates electrical energy by oxidation of a redox active species and reduction of oxygen in an oxygen reduction reaction (ORR) and/or in an electrical energy storage mode in which it consumes electrical energy to reduce a redox active species and generates oxygen in an oxygen evolution reaction (OER), and which is a hybrid redox flow cell comprising a negative half-cell (1), a positive half-cell (2), a negolyte (3A) with a polyoxometalate (POM) as redox active species in the negative half-cell (1), an ion exchange membrane (4) disposed between the negative half-cell (1) and the positive half-cell (2), a negative electrode (5) in the negative half-cell (1), a positive electrode (6) in the positive half-cell (2), characterised in that the polyoxometalate (POM) is capable of multiple electron transfer, and in that the positive electrode (6) is equipped with an oxygen reduction reaction (ORR) and/or oxygen evolution reaction (OER) catalyst.

Fig. 2

EP 4 181 239 A1

**Description**

The present invention relates to an electrochemical cell comprising an electrolyte comprising a polyoxometalate (POM) capable of multiple electron transfer as electroactive agent.

In an energy scenario where renewables play a dominant role energy management becomes the central part of an overall energy strategy. Since a number of electricity producers like solar, wind water are available at times when consumption is different from generation energy management requires energy storage on a large scale. Today various techniques are available like intercalation batteries, redox flow batteries or energy storage in form of hydrogen. The two former technologies can only store under stationary conditions since it would be too cumbersome to transport them. While the energy storage capacity of redox flow batteries is in principle easily scalable, current systems require important resources in terms of weight and volume. Hydrogen, on the other hand, can be produced by electrolysis from electricity and transported in pressurised containers or via a pipeline to a location where hydrogen can be converted back to electricity through a fuel cell. While this technique has considerable flexibility in using electricity where it is needed, one downside is its low efficiency which is for electricity-hydrogen-electricity chain only about 30%. Other downsides of hydrogen include the need for pressurization to achieve meaningful energy densities as well as safety concerns, last not least due to the known reactivity of hydrogen.

Many current mobile and portable devices or applications that consume energy rely on lithium-ion batteries, as these achieve high energy densities, provide high cell voltages, withstand high discharge currents (which is allowing for automotive applications such as cold-starters or drives for hybrid vehicles), can be swiftly charged, have low self-discharge rates (in the order of 3 to 5% per month), have high coulombic efficiency, can be almost completely discharged without affecting cycle time, lifetime or high current output and are available in a number of variations adapted to different needs, etc. At the present date, almost no other technology is used anymore in portable and mobile applications, and the market-share of lithium ion batteries is still increasing in power tools and electric bicycles, and hardly any other battery type is used in electric cars, and increasingly, lithium ion batteries get used in stationary storage devices.

Although high charging rates are achievable with lithium-ion batteries, the charging infrastructure that is required to meet the growing demand, in particular in the automotive sector, i.e. for charging electric cars swiftly, is an important economic challenge. Regardless thereof, the charging still takes time (in most cases very considerable amounts thereof) and leads to important stand stills of devices, such as automobiles, or impairments as regards the mobility and/or usability of devices (a device which is charging is not a mobile, at least with respect to the charging station; irrespective thereof, the usability of a device may at least be impaired during charging). As far as the automotive sector is concerned, stand stills due to recharging are an important downside, affecting the mobility range. The latter decreases with increasing vehicle weight, such as in trucks, where stand stills due to recharging and limited mobility ranges can be particularly costly for sheer economic reasons. Irrespective thereof, lithium-ion batteries are sensitive to deep discharge, overcharge and excessive temperatures, which necessitates integration of control electronics in devices using them, or accordingly dedicated charging devices. Furthermore the ideal operating temperature for lithium ion batteries is between 10 and 35°C, and discharge currents of lithium ion batteries are limited at lower temperatures. Apart thereof, the constantly growing demand for lithium has negative impacts on the environment, especially where lithium mining takes place. The recycling of lithium requires the use of protective gas, which means recycling is costly. The massive use of lithium accordingly has ecologic and economic downsides. Lithium-ion batteries are susceptible to ignition, in particular upon exposure to electrical overload, mechanical damage, and thermal stress, which is the cause of strict regulations regarding aerial transport (lithium-ion batteries may only reach a certain capacity and are only allowed in hand luggage), and which is a remaining safety concern of this battery-type.

It is also noteworthy that the charge transfer occurring in a lithium battery involves permeation of lithium ions through a membrane, and possible deposit of lithium on an electrode when taking up an electron. In this context, phase transitions and crystallization may occur which would impair the longevity of lithium batteries.

There is accordingly a need for alternatives to lithium-ion batteries, in particular alternatives that allow for shorter stand stills or temporal impairments of all kinds of portable, mobile or stationary devices due to recharging, while achieving power densities and energy densities comparable to those of lithium-ion batteries, so as to represent a true alternative to lithium-ion batteries. Ideally, such an alternative should be less inclined to ignite upon electrical overload, mechanical damage, and/or thermal stress, and cause less safety concerns than known technologies involving the use of lithium or hydrogen.

Electrochemical cells are used for electrical energy storage (EES). EES is a process of converting energy, usually electrical energy, into a form that can be stored for converting to electrical energy when needed. EES allows electricity production to be de-coupled from its supply. It enables electricity to be (i) stored at times of low demand, low generation cost or when stemming from intermittent energy sources and (ii) used at times of high demand, high generation cost or when no other generation means are available.

A rechargeable or secondary battery is a form of electricity storage. It stores electricity in the form of chemical energy. A battery consists of one or more electrochemical cells. Each cell consists of a liquid, paste, or solid electrolyte together with a positive electrode and a negative electrode. During discharge, electrochemical reactions occur at the two electrodes generating a flow of electrons through an external circuit. The reactions are reversible. Thus, a secondary battery can be recharged by applying an external voltage across the electrodes. Batteries store energy in a closed system, and the electrodes within a battery react and can change when a battery is charged or discharged.

A fuel cell (FC) converts chemical energy into electrical energy. It does so by producing electricity from external supplies of fuel and oxidant. These react in the presence of an electrolyte. The reactants flow in and the reaction products flow out, whereas the electrolyte remains in the FC. FCs can operate virtually continuously as long as the necessary flows are maintained.

A reversible FC is a fuel cell that may consume chemical A (the fuel) and chemical B (the oxidant) to produce electricity, and be reversed to consume electricity and produce chemical A (the fuel) and chemical B (the oxidant). FCs consume reactants, which must be replenished. Moreover, the electrodes of a FC are catalytic, not altered by the reaction and thus relatively stable.

Different fuels and oxidants exist. E. g. hydrogen as fuel and oxygen as oxidant. Other possible fuels include hydrocarbons, alcohols and metals, and other possible oxidants include chlorine and chlorine dioxide. It is thus clear that the environmental impact of fuel cells depends on the fuel and reactants they consume, as well as on the products they generate.

A redox flow battery (RFB) is a battery in which an electrolyte contains one or more dissolved redox active species flowing through the cell or rather each half-cell. A typical RFB cell consists of two electrode compartments (half-cells) divided by a separator. The separator is commonly an ion exchange membrane which prevents the crossover of active species between half-cells but allows the movement of ions between electrode compartments for the balancing of charge. The positive and negative electrolyte (also referred to as posolyte and negolyte) are stored in external tanks and are pumped into each half-cell. The electrodes of a RFB are usually inert, serving as the site for redox reactions of the active species which remain soluble in the electrolyte. Upon exiting the electrode compartments, the electrolytes are returned to the storage tanks to be recirculated through the cell. Individual RFB cells can be connected in series to produce cell stacks through the use of conductive bipolar plates which connect one cell to another. The array of cell stacks, stored electrolyte and the balance of plant constitute a complete RFB system. The balance of plant includes all other components necessary for operation of an RFB: pumps, plastic plumbing and tanks, a power conditioning system and systems for battery monitoring and control. The electricity is stored by means of an electron exchange involving a reduction of the active species in the negolyte and an oxidation of the active species in the posolyte, i.e. by means of electrochemical reactions. The electrolytes and thus the energy may be transported and stored externally, in tanks. The electrochemical reactions involved are reversible, thus allowing the RFB to be charged, discharged and recharged. In contrast to conventional batteries, RFBs store energy in the electrolyte solutions, i.e. in the negolyte and posolyte solutions. The power rating is independent of the storage capacity. While the energy is determined by the quantity of electrolyte used, the power rating is determined by the active area of the cell stack and the rate of the electrochemical reaction. Conventional RFBs can release energy continuously at a high rate of discharge for long times depending on the system configuration.

While in FCs the electroactive chemicals (e.g. hydrogen, methanol, and oxygen) flow through the reactor, and get consumed in a chemical reaction, the electrolyte of an RFB remains within the reactor and reacts in an electrochemical reaction. RFBs are also distinguished from FCs by the fact that the electron exchange occurring is reversible, i.e. RFBs are generally of the secondary battery type and so they can be recharged without replacing the active species.

FCs and RFBs have in common that the electroactive material may be stored in tanks which is then pumped to the reactor for charge transfer. Yet contrary to combusted fuels in a FC, the discharged electrolytes are not discarded in an RFB, but kept in their respective streams and pumped back into the negolyte and posolyte tanks. In an RFB the discharged species can be re-charged. For that purpose the current of the RFB would be reversed.

The electrode of the respective half-cell is termed "anode" or "cathode" depending on the process that occurs. Oxidation takes place at the anode, and reduction at the cathode. The negative electrode during discharge is hence termed anode, because the loss of electrons is associated with an oxidation occurring at the negative electrode. The positive electrode during discharge is termed cathode, because electrons cause a reduction on the side of the cathode. During charge, the negative electrode is termed cathode, for electrons cause a reduction on the side of this electrode, whereas the positive electrode is termed anode, for an oxidation takes place on the side of the anode. I.e. the electrode that functions as anode during discharge and as cathode during charge will herein be referred to as "the negative electrode", and is located in the "negative half-cell", whereas the electrode that functions as cathode during discharge and as anode during charge will herein be referred to as the "positive electrode", and is located in the "positive half-cell". The electrolyte present in the negative half-cell is referred to as "negative electrolyte" or "negolyte", and the electrolyte present in the positive half-cell is referred to as "positive electrolyte" or "posolyte".

While a FC can use liquid (e.g. ethanol, methanol), and gaseous fuels (e.g. compressed hydrogen), an RFB usually operates with dissolved redox molecules, storing its energy in solution.

The most common RFB system is currently the vanadium redox flow battery (VRB) with a single-electron redox process V(II)/V(III) at the negative electrode and V(IV)/V(V) at the positive electrode. Drawbacks of a VRB are that the energy density of electrolytes containing divalent/trivalent vanadium is limited, and that the corresponding systems have a slow response time. In addition thereto, the electrolyte solution of VRBs usually comprises important amounts of acid, requiring appropriate safety and environmental measures.

EP 0 517 217 A1 describes a hybrid redox flow cell wherein a single-electron redox process V(II)/V(III) at the negative electrode (like in a VRB) is combined with an oxygen reduction process at the positive electrode (like in many FCs). The positive half-cell requires much less volume than in a VRB or RFB. While this approach reduces the volume and weight in comparison to a conventional VRB, the shortcomings of this system remain low energy density/power density, safety and environmental footprint (due to the electrolyte containing substantial amounts of sulfuric acid).

Other known hybrid redox flow cells oxidize hydrogen (gas) on the negative electrode, and comprise a redox electrolyte on the side of the positive electrode, i.e. a posolyte. Chakrabarti et al. in ACS Applied Materials & Interfaces 2020, 12, 48, 53869-53878 describe such cells, namely hydrogen/Vanadium or hydrogen/Manganese flow cells based on single-electron transfers in either a Vanadium or Manganese containing redox electrolyte with enhanced electrochemical performance based on modifications of the electrodes involved. The authors also refer to hybrid S/air redox flow cells. S/air systems are described as operating under highly corrosive alkaline conditions, requiring electrode surfaces with good catalytic activity. The S-Air chemistries reportedly suffer greatly from irreversibility of the polysulfide reaction.

Hydrogen has comparably high extraction costs. Its physical and chemical properties complicate the handling, storing and transport of hydrogen. The high reactivity, in particular with oxygen, may cause explosions, leading to security concerns. Being a lightweight gas, pressure and/or cooling are required for liquefying and storing hydrogen in substantial amounts. Procedures involving hydrogen gas thus have the disadvantage of necessitating devices and procedures adapted accordingly.

In contrast to older RFBs, recent RFBs include electrolytes comprising polyoxometalates (POMs) as stationary storage material in RFBs. POMs are a class of compounds formed by the linkage of $d^0$ metal-centred polyhedra with oxygen atoms located at the vertices. POMs have been known for a while, in particular as catalysts for the oxidation of organic compounds. They are able to undergo highly reversible multiple electron redox processes. Multiple electron exchange makes POM-based RFBs to display increased energy densities and also considerably higher power densities because of a much faster kinetics of the redox process in RFBs using POMs. Known POM-based RFBs require two separate tanks for negolyte and posolyte. As a result, the overall energy density of a system is limited and mainly determined by the size of the tanks. It is thus usually confined to stationary applications, even though POMs represent a considerable improvement in terms of energy density and power density over conventional single-electron transfer redox active species.

For instance, H.D. Pratt III et al., Journal of Power Sources 236 (2013) 259-264 describe a RFB based on a POM-redox system utilizing two, three-electron polyoxometalate redox couples ($SiV^V_3W^{VI}_9O_{40}^{7-}/SiV^{IV}_3W^{VI}_9O_{40}^{10-}$ and $SiV^{IV}_3W^{VI}_9O_{40}^{10-}/SiV^{IV}_3W^V_3W^{VI}_6O_{40}^{13-}$) for use in stationary storage. EP 3 432 402 A1 describes the use of $[PV_{14}O_{42}]^{9-}$ as posolyte and $[SiW_{12}O_{40}]^{4-}$ as negolyte in an RFB, with two-electron POM redox couple $[SiW_{12}O_{40}]^{4-}/[SiW_{12}O_{40}]^{6-}$ in the negative half-cell, and 6-electron POM redox couple $[H_6PV^V_8V^{IV}_6O_{42}]^{9-}/[PV^V_{14}O_{42}]^{9-}$ in the positive half-cell, wherein reduced $[PV_{14}O_{42}]^{9-}$ is described as being oxygen sensitive. EP 3 561 932 A1 describes similar POM compound $Li_XH_Y[PV_{14}O_{42}]$. The provision of the cation $Li^+$ in varying amounts would appear to enhance solubility in the respective electrolyte. Some developments relate to the chemistry of solutions used as electrolytes in RFBs. E.g. EP 3 435 464 A1 describes the use of buffers for enhancing the chemical stability of POM redox pairs in their respective electrolyte. Other developments relate to electrode design for RFBs using POMS, such as EP 3 439 093 A1 describing the surface geometry of electrodes of corresponding RFBs. Known RFBs are found in or designed for stationary applications rather than portable or mobile applications.

There is a permanent striving for improved EES devices and designs, be it in terms of volume and weight, as well as far as energy and/or power density are concerned - irrespective of whether destined for stationary, portable or mobile applications. There is in particular still room for improvements of POM based electrolytes and their use in the context of EES. It is accordingly an object of the present invention to provide an improved POM based EES system.

The aforementioned problem is solved by an electrochemical cell for electrical energy storage (EES), which is capable of operating in an electrical energy delivery mode in which it generates electrical energy by oxidation of a redox active species and reduction of oxygen in an oxygen reduction reaction (ORR) and/or in an electrical energy storage mode in which it consumes electrical energy to reduce a redox active species and generates oxygen in an oxygen evolution reaction (OER), and which is a hybrid redox flow cell comprising a negative half-cell, a positive half-cell, a negolyte with a polyoxometalate as redox active species in the negative half-cell, an ion exchange membrane disposed between the negative half-cell and the positive half-cell, a negative electrode in the negative half-cell, a positive electrode in the positive half-cell, characterised in that the polyoxometalate (POM) is capable of multiple electron transfer, and in that the positive electrode is equipped with an oxygen reduction reaction (ORR) and/or oxygen evolution reaction (OER) catalyst.

The term "hybrid redox flow cell" implies that the negolyte is stored in an external tank and pumped into a negative half-cell.

The term "negolyte" as used herein relates to an aqueous or non-aqueous solution of a redox active species.

The term "redox active species" as used herein relates to a compound that may be electrochemically reduced or oxidized, thereby storing or releasing electrons. The molecular formula of the compound may or may not be affected by this process.

The term "polyoxometalate" or its acronym "POM" is known to those skilled in the art and refers to a polyatomic ion that consists of three or more transition metal oxyanions linked together by shared oxygen atoms to form closed 3-dimensional frameworks, wherein the metal atoms are either group 6 metal atoms chosen from Mo or W or group 5 metal atoms chosen from V, Nb, Ta. A POM can be an iso-polymetalate (composed of only one kind of metal and oxide), a hetero-polymetalate (composed of one metal, oxide, and a main group oxyanion such as phosphate, silicate, etc.), or it can differ therefrom. As used herein, the term "POM" is to be understood to also include sulfido, imido or other *O*-replaced oxometallates, i. e. oxometallates wherein one or more terminal oxide centres of the polyoxometalate framework are substituted by other ligands, such as e. g. $S^{2-}$, $Br^-$, $F^-$, $NR^{2-}$, nitrosyl or alkoxy groups.

The term "ion exchange membrane" as used herein refers to a membrane designed to allow the movement of ions (cations or anions) between the half-cells for the balancing of charge while acting as an electronic insulator and reactant barrier. In the context of the present invention, the membrane is in particular a barrier to oxygen ($O_2$). Corresponding membranes are known to those skilled in the art from well-established cells such as proton exchange membrane fuel cells (PEMFCs). The most commonly used ion exchange membranes are based on a modified tetrafluoroethylene based fluoropolymer copolymer known to those skilled in the art under the brand name Nafion™ (Chemours, formerly DuPont), a synthetic polymer with ionic properties or ionomer due to sulfonic acid groups added into the bulk polymer matrix. Other perfluorinated ionomers known to those skilled in the art are e. g. sold under the tradenames Flemion™, Aciplex™, Gore-Select®. Apart from cation exchange membranes, also anion exchange membranes may be used, such as membranes based on polyvinylidene fluoride (PVDF) or fluorinated ethylene propylene copolymers (FEP) comprising sidechains containing amine groups, such as aminated polyvinylbenzyl, that enable anion transport through the membrane. Examples for commercially available anion exchange membranes are FAP-330-PE and FAP-375-PP from fumasep® or the DURION™-II and PENTION™ series from Xergy Inc.

The negative electrode may be made from any suitable electrode material, e.g. electrode material known from negative cells of RFBs, VRBs or hybrid redox flow cells according to the prior art. A common material is for instance carbon felt or various forms and combinations of carbon paper and carbon plastic.

The positive electrode may be made from any suitable electrode material that is resistant to oxidative corrosion and catalytically facilitating the oxygen reduction reaction and/or the oxygen evolution reaction or able to support such a catalyst. One common material is titanium, often found in the form of a foam, which additionally may be coated with a catalyst.

The term "multiple electron transfer" is intended to mean that at least 2 electrons per molecule of electroactive species (i.e. POM) may be transferred onto electrode (1) as a result of an electrochemical reaction, thereby oxidising the POM and discharging the negolyte. This is in contrast to electroactive species used for single electron transfers as described in the prior art referred to herein above.

The term "oxygen reduction reaction" with the acronym "ORR" refers to a reaction in which molecular oxygen ($O_2$) gets dissociated and reduced in an electrochemical reaction taking place at or around the positive electrode. Corresponding reactions can be facilitated by an oxygen reduction reaction catalyst or ORR catalyst.

The term "oxygen evolution reaction" with the acronym "OER" refers to a reaction in which molecular oxygen ($O_2$) gets produced by oxidation e.g. of water ($H_2O$) in an electrochemical reaction taking place at or around the positive electrode. Corresponding reactions can be facilitated by an oxygen evolution reaction catalyst or OER catalyst.

Known POM based electrolytes capable of multiple electron transfers to date have not been used in a hybrid redox flow cell. Hybrid redox flow cells as claimed have the advantage over conventional RFBs that the positive half-cell requires less volume and space, as oxygen may be taken from or is released into the environment, just like water, contrary to a liquid redox electrolyte or posolyte, which requires additional equipment, such as a tank and means to conduct posolyte towards and away from the ion exchange membrane and positive electrode. The use of POMs capable of multiple electron transfers enhances the energy density even more (compared to e.g. divalent/trivalent vanadium containing electrolytes described in the prior art), due to the multiple electron transfer ability of the POMs in the negolyte.

Charged POM based electrolytes exhibit comparably low self-discharge rates, and they last very long. Without wanting to be bound by theory, applicants believe this may be due to the size of a POM which prevents the permeation of a POM through a membrane, and/or due to the fact that the redox active species, i.e. the POM, remains in solution and does not undergo phase transitions such as e.g. lithium in a lithium battery.

The electrochemical cell according to the present invention thus combines both economic and environmental advantages in a synergistic manner.

Due to the important economy in required weight and volume associated therewith, and also due to other enhanced properties, the electrochemical cell according to the present invention is highly interesting not only for stationary, but also for mobile and even portable applications.

The negolyte employed therein is rechargeable, wherein the recharging can take place spatially and temporally remotely. I.e. the charged negolyte may be stored in a tank, just like a fuel. Yet it is not consumed like a conventional fuel. Contrary to a burnt fuel, the discharged negolyte may be recharged in a device equipped with a charging or electrolyzing device. It may be collected prior to being recharged, thus allowing consumers to acquire charged negolyte and replace discharged negolyte by charged negolyte at the same time. The discharged negolyte may be recharged remotely from the consumer. This can either happen in conventional energy production plants, and/or by means of renewable energy sources.

For instance, a wind turbine converting wind energy in electrical energy may dispose of the so-generated energy by recharging discharged negolyte, whenever there is wind. The recharged negolyte can then be stored and subsequently be transported to wherever it is needed. Charged negolyte may be stored in tanks, sold at conventional gas stations, etc.

A further advantage is that the use of POMs means that aqueous electrolytes at near neutral pH may be used, which are much less toxic than conventional redox battery electrolyte solutions - the latter being highly acidic.

Due to the ability of POMs to store and release more than just a single electron, as is the case in conventional divalent/trivalent vanadium redox electrolytes, or also manganese based electrolytes as used in the hybrid redox flow hybrid cells according to the prior art, electrolytes with comparably high energy density may be provided that, in addition, do not require a high acid content.

Irrespective thereof and in addition thereto, POM containing electrolytes allow for a much higher energy density and higher power density than conventional flow cell electrolytes or conventional hybrid redox flow cell electrolytes, due to the fact that multiple electron transfers and high reaction rates are involved. This makes electrochemical cells according to the present invention advantageous for peak-shaving applications. Peak-shaving enables consumers and electricity providers alike to avoid or reduce load-peaks. As load-peaks have a direct impact on network costs and hence network usage fees, peak-shaving may allow for important economies. The use of electrolytes comprising POMs broaden the range of possible peak-shaving applications of electrochemical cells according to the invention in comparison to comparable electrochemical cells according to the prior art which are based on single electron transfer systems.

According to a first embodiment, the electrochemical cell according to the present invention is capable of operating in an electrical energy delivery mode in which it generates electrical energy by oxidation of a redox active species and reduction of oxygen in an oxygen reduction reaction (ORR), which is characterised in that the positive electrode (6) is equipped with an oxygen reduction reaction or ORR catalyst.

An electrochemical cell according to this embodiment is particularly useful for use in devices consuming energy, such as in automotive vehicles. The electrical energy may swiftly be provided in the form of charged negolyte, which may be stored in an onboard storage tank, and which may be swiftly replaced by charged negolyte, once it has been discharged in an electrochemical cell according to this embodiment. The replacement of discharged electrolyte or negolyte by charged electrolyte or negolyte is much faster than electrical re-charging within the device. Thus, a corresponding device can be used nearly without interruptions as would be due if the recharging were to take place within the energy consuming device itself. At the same time, the redox active species on the side of the positive electrode is oxygen, which may be taken from the air, and which is in gaseous form. This effectively provides for reduced weight and volume in comparison to conventional RFB designs.

A second embodiment of the electrochemical cell according to the present invention is capable of operating in an electrical energy storage mode in which it consumes electrical energy to reduce a redox active species and generates oxygen in an oxygen evolution reaction (OER), and is characterised in that the positive electrode (6) is equipped with an oxygen evolution reaction or OER catalyst.

An electrochemical cell according to this second embodiment is useful for charging negolyte spatially and/or temporally remotely and thus independently from the consumer. The use of various resources such as time, electrical energy (depending e. g. on availability, carbon footprint and/or price), catalysts and so on and so forth can thus be optimised depending on the needs and/or circumstances.

A third embodiment of the electrochemical cell according to the present invention is capable of operating in an electrical delivery mode in which it generates electrical energy by oxidation of a redox active species and reduction of oxygen in an oxygen reduction reaction (ORR) and in an energy storage mode in which it consumes electrical energy to reduce a redox active species and generates oxygen in an oxygen evolution reaction (OER), and is characterised in that the positive electrode (6) is equipped with a bifunctional oxygen reduction reaction (ORR) and oxygen evolution reaction (OER) catalyst.

This third embodiment combines all advantages of the aforementioned first and second embodiments, thus improving autonomy and versatility of electricity consuming devices. The advantage of this embodiment in other words resides in the possibility to discharge the electrochemical cell, and to be able to restore available energy by either replacing the discharged negolyte (which can be fast and convenient at times) as in the first embodiment or by recharging the discharged negolyte as in the second embodiment, depending on the needs (e.g. using the replacement option for reasons such as swiftness, and the recharging option e.g. for economic reasons).

Preferably, the oxygen reduction reaction (ORR) and/or oxygen evolution reaction (OER) catalyst of electrochemical cells according to the present invention is chosen from among the following: Ir, Pt, Ru, Mn-oxide, $Co_3O_4$, $Pd_3Co$, Ir/C, $IrO_2/TiO_2$, Ru/C, Pt/C, Mn-oxide/C, $Co_3O_4$/N-reduced mildly oxidized graphene oxide, $Pd_3Co$/N-doped reduced graphene oxide, PtCo-nanowires, $Pt/Ti_{0.9}Co_{0.1}N$-nanoparticles, Pt plus Ir, $IrO_2$, Ru-Ir, $RuO_2$, $IrO_2RuO_2$, $IrO_2/RuO_2$, $Ir_x(IrO_2)_{10-x}$ $Pt/TiO_2$ and $Ir/TiO_2$.

The slash symbol "/" is to be understood so that it separates the respective catalyst from the material on which it is supported, where applicable. In this context, C is to be understood so as to designate a support made of carbon, such as carbon, carbon black, graphene, carbon felt, etc.

The aforementioned catalysts are ORR catalysts or OER catalysts or both (i.e. bifunctional), e.g. as summarised in the following table 1.

Table 1 - catalyst examples

| Catalyst/Support | Reaction | Medium | Reference |
|---|---|---|---|
| Ir/C | OER | Alkaline | 1 |
| Ir/Ti | OER | Acidic | 2 |
| Ru/C | OER | Alkaline | 1 |
| Pt/C | ORR | Alkaline | 1 |
| Mn oxide | OER/ORR | Alkaline | 1 |
| $Co_3O_4$/N-rmGO (reduced mildly oxidized graphene oxide) | ORR | Alkaline | 3 |
| $Pd_3Co$/NG (Nitrogen-doped reduced graphene oxide) | OER/ORR | Acidic | 4 |
| PtCo-nanowires | ORR | Acidic | 5 |
| $Pt/Ti_{0.9}Co_{0.1}N$-nanoparticles | ORR | Acidic | 6 |
| References: [1]: J. Am. Chem. Soc. 2010, 132 (39), 13612-13614, https://doi.org/10.1021/ja104587v; [2]: Chemie Ing. Tech. 2020, 92 (1-2), 31-39, https://doi.org/10.1002/cite.201900101; [3]: Nat. Mater. 2011, 10 (10), 780-786, https://doi.org/10.1038/nmat3087; [4]: Sci. Rep. 2018, 8 (1), 3591, https://doi.org/10.1038/s41598-018-22001-9; [5]: Nano Energy 2014, 10, 135-143, https://doi.org/10.1016/j.nanoen.2014.09.013; [6]: J. Power Sources 2015, 284, 296-304, https://doi.org/10.1016/j.jpowsour.2015.03.001; [7]: Renew. Sustain. Energy Rev. 2017, 79, 585-599, https://doi.org/10.1016/j.rser.2017.05.112. | | | |

The main bifunctional catalysts are Pt plus Ir, $IrO_2$, Ru-Ir, $RuO_2$, $IrO_2$-$RuO_2$, $IrO_2/RuO_2$, $Ir_x(IrO_2)_{10-x}$ $Pt/TiO_2$ and $Ir/TiO_2$.[7] A skilled person will know how to choose the catalyst and support depending on individual needs and preferences.

Commercially available catalysts such as Ir/C, Ru/C, Pt/C (available as powders, for instance from Premetek) or $IrO_2/TiO_2$ (available as powder, for instance from Umicore) are readily available, others may be prepared as described in the literature. The Mn-oxide in the respective publication was supported on glassy carbon. In a practical application a different conductive and corrosion resistant support could be used.

Electrochemical cells according to the present invention are preferred wherein the polyoxometalate (POM) is capable of transferring 2 to 32, preferably 2 to 24, more preferably 2 to 20, most preferably 2 to 10 electrons.

Corresponding POMs are at the disposal of those skilled in the art. E.g. the synthesis of 32-electron reduced $[H_2W_{12}O_{40}]^{6-}$ is described in J. Inorg. Nucl. Chem. 1976, Vol. 38, pp. 807-816. The publication "Polyoxometalate Molecular Science" (Juan J. Borrás-Almenar, E. Coronado, Achim Müller, M.T. Pope; Springer Science & Business Media, 6 Dec 2012) mentions the 24-electron as well as the 18-electron reduced form of $[SiW_{12}O_{40}]^{4-}$. An example of a Dawson-type POM ($[P_2W_{18}O_{62}]^{6-}$) was reported by Cronin et al. (Nature Chemistry, vol. 10, pages 1042-1047 (2018)), which they reduced by 18 electrons.

While the use of POMs capable of transferring higher numbers of electrons, e.g. 32 electrons, allows for a higher energy density of the negolyte, the transfer of a lower number of electrons allows for more constant electrochemical characteristics, e.g. in terms of potential.

Electrochemical cells according to the present invention are preferred wherein the polyoxometalate (POM) is chosen from among $[PMo_{12}O_{40}]^{3-}$, $[PW_{12}O_{40}]^{3-}$, $[SiW_{12}O_{40}]^{4-}$, $[ZnW_{12}O_{40}]^{6-}$, $[H_2W_{12}O_{40}]^{6-}$, $[P_2W_{18}O_{62}]^{6-}$, $[CoW_{12}O_{40}]^{5-}$

, $[SiV_3W_9O_{40}]^{7-}$, $[AlO_4Al_6Fe_6(OH)_{24}(OH_2)_{12}]^{7+}$.

The POMs listed allow respectively for a maximum reduction degree in electrons as listed in the following table 2.

Table 2

| POM | Maximum reduction degree / electrons |
|---|---|
| $[PMo_{12}O_{40}]^{3-}$ | 24 |
| $[PW_{12}O_{40}]^{3-}$ | 24 |
| $[SiW_{12}O_{40}]^{4-}$ | 24 |
| $[ZnW_{12}O_{40}]^{6-}$ | 24 |
| $[H_2W_{12}O_{40}]^{6-}$ | 32 |
| $[P_2W_{18}O_{62}]^{6-}$ | 36 |
| $[CoW_{12}O_{40}]^{5-}$ | 25 |
| $[SiV_3W_9O_{40}]^{7-}$ | 27 |
| $[AlO_4Al_6Fe_6(OH)_{24}(OH_2)_{12}]^{7+}$ | 6 |

Electrochemical cells according to the present invention are preferred wherein the redox reaction at the negative electrode can be one of the following (including partial reduction reactions):

$$[SiV_3W_9O_{40}]^{10-} + 4\ e^- \rightarrow [SiV_3W_9O_{40}]^{14-};$$

$$[CoW_{12}O_{40}]^{6-} + 4\ e^- \rightarrow [CoW_{12}O_{40}]^{10-};$$

$$[PW_{12}O_{40}]^{3-} + 6\ e^- \rightarrow [PW_{12}O_{40}]^{9-};$$

$$[SiW_{12}O_{40}]^{4-} + 18\ e^- \rightarrow [SiW_{12}O_{40}]^{22-};$$

$$[BW_{12}O_{40}]^{5-} + 18\ e^- \rightarrow [BW_{12}O_{40}]^{23-};$$

$$[P_2W_{18}O_{62}]^{6-} + 18\ e^- \rightarrow [P_2W_{18}O_{62}]^{24-};$$

$$[H_2W_{12}O_{40}]^{6-} + 24\ e^- \rightarrow [H_2W_{12}O_{40}]^{30-};$$

$$[PMo_{12}O_{40}]^{3-} + 24\ e^- \rightarrow [PMo_{12}O_{40}]^{27-};\ \text{and}$$

$$[H_2W_{12}O_{40}]^{6-} + 32\ e^- + OH^- \rightarrow [HW_{12}O_{40}]^{39-} + H_2O.$$

A skilled person will acknowledge that protons may be included in corresponding proton-coupled charge transfer reactions, and charge-balance may also be carried out by cations like e. g. $Li^+$ and depends on pH, which has been omitted for simplicity.

The pH of the negolyte can be acidic, neutral or basic up to pH 12.

It is however preferred that in the electrochemical cell according to the present invention the negolyte (3A) is an aqueous solution having a pH in the range of from 1.5 to 12, preferably from 6 to 12, most preferably from 7 to 12.

While the respective redox reactions can effectively take place in a wide pH range, applicants have observed that multiple electron transfer can be more efficient at higher pH values up to pH 12. This is one reason why working at a higher pH range, i.e. at a pH of from 6 to 12, is preferred. Other reasons are safety both for users and the environment. The pH range of from 7 to 12 is particularly preferred.

The aforementioned problem is further solved by an Electric Energy Storage (EES) process involving the use of at least one electrochemical cell according to the present invention.

According to a preferred embodiment of the Electric Energy Storage (EES) process according to the present invention the redox electrolyte is charged in an electrochemical cell according to the aforementioned second or third embodiment, and discharged in an electrochemical cell according to the aforementioned first or third embodiment of an electrochemical cell according to the invention.

A corresponding process allows for the same advantages as described above in connection with first to third embodiment of an electrochemical cell according to the present invention.

Preferably, the charged redox electrolyte is stored separately from the cell in which it is or has been discharged and/or re-charged.

A corresponding process enables to make use of existing resources and infrastructures, such as gas stations, for storing, distributing and collecting redox electrolyte comprising a polyoxometalate (POM), thus enabling important economies while providing an EES for a broad range of applications, including in particular mobile and also portable applications.

The aforementioned problem is further solved by the use of a cell according to the present invention in an Electric Energy Storage (EES) System or device.

An example for a corresponding EES device is a battery comprising at least one stack of cells according to the present invention or any device comprising a corresponding battery.

Another example for a corresponding EES device is a negolyte charging station involving cells according to the present invention destined to charge discharged negolyte, which can be fed with discharged electrolyte, and from which charged electrolyte can be obtained.

The use of a cell according to present invention in a stationary, portable or mobile device or application is particularly advantageous, for it enables to realise stationary, portable or mobile devices or applications while avoiding safety risks associated with the use of lithium and/or hydrogen, as well as unnecessary stand-stills due to recharging. These are crucial advantages over lithium-ion batteries, enabling an infrastructure comparable to that associated with the use of gasoline in the automotive sector.

Instead of investing in a costly and comparably ineffective decentralised charging infrastructure aimed at the recharging of individual devices (such as individual electrical cars), gas stations could be equipped with negolyte tanks. Discharged negolyte could be swiftly replaced at such a station, and the stand-still of the automotive device thus "reloaded" could thus be reduced significantly. The discharged negolyte could either be recharged in an electrolysing device for re-use at the station, or be transported elsewhere therefore.

A stationary, portable or mobile device or application equipped with one or more cells according to the present invention embodies the advantages mentioned above.

A battery equipped with a stack of cells according to the present invention represents already a corresponding device.

It is noted in this context, that all kinds of stationary, portable or mobile devices or applications are imaginable, including, but not limited to automotive devices, such as electrical cars, electrical trucks, electrically powered locomotives, aerial or airborne devices, such as aircraft, airplanes, drones, etc.

## Detailed Description

In the following, the present invention will be described in more detail by making reference to the figures, wherein

Fig. 1 is a schematic view of a conventional RFB with a negative half-cell (1), a positive half-cell (2), redox electrolytes (3), namely negolyte (3A) and posolyte (3B), a membrane (4), a negative electrode (5), a positive electrode (6), inlets (7) and outlets (8), respective electrolyte tanks (9), conduits (10) and pumps (11)

Fig. 2 is a schematic view of a electrochemical cell according to the present invention with a negative half-cell (1), a positive half-cell (2), redox electrolyte (3, 3A), a membrane (4), a negative electrode (5), a positive electrode (6), inlets (7) and outlets (8), an electrolyte tank (9), conduits (10) and a pump (11);

Fig. 3 is a diagram showing the potential response to galvanostatic pulses of a negative half-cell containing a negolyte comprising a POM in a three-electrode measuring cell;

Fig. 4 shows a voltage-current density curve and power density-current density curve of a electrochemical cell according to the present invention, simulated as described in example 1B below;

Fig. 5 shows a voltage-current curve and a power-current curve of a stack of cells according to the present invention, simulated as described in example 1C below; of a simulated $SiW_{12}$ - Air stack with 30 cells and an active area of 20 cm x 20 cm, based on the single cell in Fig. 3;

Fig. 6 is a diagram showing the potential response to a current pulse (corresponding to a power surge) of a simulated stack of cells according to the invention vs. a conventional hybrid redox flow cell with a negolyte comprising a single-electron transfer active species as in the prior art;

Fig. 7A and 7B are Ragone Plots comparing volumetric and gravimetric power and energy densities of two different POM-based batteries with a 85 kWh lithium battery as used in a commercially available car.

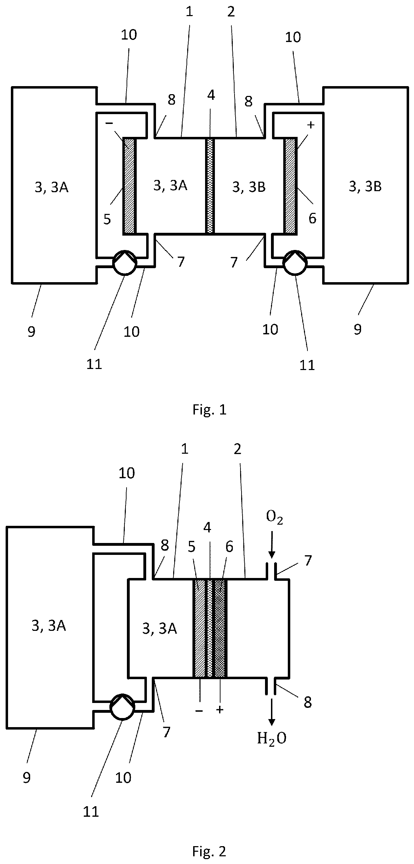

A conventional RFB system as shown in Fig. 1 comprises a negative half-cell (1) and a positive half-cell (2) as well as redox electrolyte (3), more precisely a negolyte (3A) in the negative half-cell (1) and a second electrolyte (3B) in the positive half-cell (2). An ion permeable membrane (4) separates the negative half-cell (1) from the positive half-cell (2). The negative half-cell (1) is equipped with a negative electrode (5) and the positive half-cell (2) with a positive electrode (6). The electrodes (5) and (6) as shown in Fig. 1 are situated opposite the membrane (4). They may also be situated elsewhere, e.g. on the respective surface of the membrane (4), or protrude into the space occupied by the electrolyte, Fig. 1 being entirely schematic. Inlets (7) and outlets (8) connect the respective half-cell with electrolyte tanks (9) via conduits (10) that are equipped with pumps (11). The pumps serve to circulate the respective redox electrolyte, i.e. negolyte (3A) and posolyte (3B). The negolyte (3A) in the negative half-cell (1) stores electrons by means of a first redox active species dissolved therein. The posolyte (3B) in the positive half-cell (2) is an acceptor of electrons, the acceptance of electrons being mediated by a second redox active species dissolved therein. In conventional RFBs, the first redox active species in the negative half-cell (1) usually stores a single electron that may be transferred onto the electrode, e.g. electrode (5), thereby oxidising the first redox active species and discharging the negolyte (3A) comprised in the negative half-cell (1), while a single electron is being transferred from the positive electrode (6) onto the second redox active agent dissolved in the posolyte (3B) in the positive half-cell (2), thereby reducing the redox active species on the side of the positive half-cell (2). Ions may permeate the membrane during the process. The process may be reversed so as to charge the RFB. The amount of energy that can be stored in a conventional RFB depends on the volume of tanks (9) attached thereto or integrated therein, as well as on the energy density that may be achieved depending on the redox active species employed in the respective redox electrolyte (3).

An electrochemical cell for electrical energy storage (EES) according to the invention schematically shown in Fig. 2 is capable of operating in an electrical energy delivery mode in which it generates electrical energy by oxidation of a redox active species and reduction of oxygen in an oxygen reduction reaction (ORR) and/or in an electrical energy storage mode in which it consumes electrical energy to reduce a redox active species and generates oxygen in an oxygen evolution reaction (OER), and is a hybrid redox flow cell constituted by a negative half-cell (1), a positive half-cell (2), a redox electrolyte (3) which functions as negolyte with a polyoxometalate (POM) as redox active species in the negative half-cell (1), an ion exchange membrane (4) disposed between the negative half-cell (1) and the positive half-cell (2), a negative electrode (5) in the negative half-cell (1), a positive electrode (6) in the positive half-cell (2), and is characterised in that the polyoxometalate (POM) is capable of multiple electron transfer, and in that the positive electrode (6) is equipped with an oxygen reduction reaction (ORR) and/or oxygen evolution reaction (OER) catalyst. The positive electrode (6) enables the reduction and/or evolution of oxygen by means of a catalyst. A multiple electron transfer may occur from the POM onto the negative electrode (1). Depending on the POM used, 2 or more, e.g. 5 to 6 electrons may be transferred instantly from one POM molecule onto the electrode (1) thereby oxidising the POM and discharging redox electrolyte (3). This occurs very swiftly. A membrane (4) mediates the transport of ions from the negative half-cell (1) to the surface of the membrane (4) on the side of the positive half-cell (2) and to the positive electrode (6), where the electrons reduce air oxygen. The reduced air oxygen may recombine with ions, e.g. protons, that have permeated the membrane, to yield e. g. water. An inlet (7) and an outlet (8) connect the negative half-cell (1) with an electrolyte tank (9) via conduits (10) equipped with a pump (11). The amount of energy that can be stored in a cell or stack of cells according to the invention depends on the volume of tank (9) attached thereto or integrated therein, as well as on the energy density that may be achieved depending on the redox active agent employed in redox electrolyte (3). Given that a POM is capable of multiple electron transfers, the energy density is much higher than in redox electrolytes containing electroactive agents that are only capable of single electron transfer as they are used in well-established conventional RFBs.

It is to be understood that Fig. 2 is merely schematic. More in particular, a skilled person will understand that individual electrochemical cells according to the present invention can be connected in series to produce cell stacks through the use of conductive bipolar plates which connect one cell to another. The array of cell stacks, stored electrolyte and the balance of plant constitute a complete battery. The balance of plant includes all other components necessary for operation of a corresponding battery: Pumps, plastic plumbing and tanks, a power conditioning system and systems for battery monitoring and control. Irrespective thereof, it is also to be understood that while the cell schematically shown in Fig. 2 is connected to a single electrolyte tank, a cell according to the present invention may alternatively be connected to a first tank for charged electrolyte and to a second tank destined for discharged electrolyte, i.e. charged and discharged electrolyte may be stored in separate tanks.

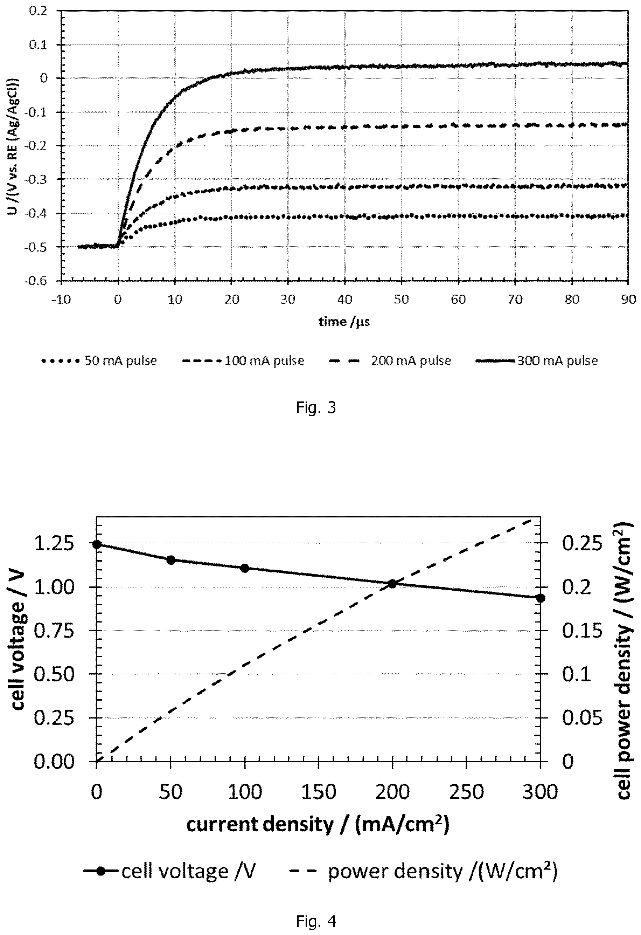

Fig. 3 is a diagram showing the potential response to galvanostatic pulses of a negative half-cell containing a negolyte comprising a POM in a three-electrode measuring cell.

Fig. 4 shows the cell-voltage and cell power density characteristics at different current densities according to the present invention as calculated based on data obtained from half-cell measurements according to the present invention as described in the example below. The depicted results are corrected by the potential drop caused by the ohmic resistance (IR corrected) so as to highlight the behaviour of the POMs irrespective of cell design.

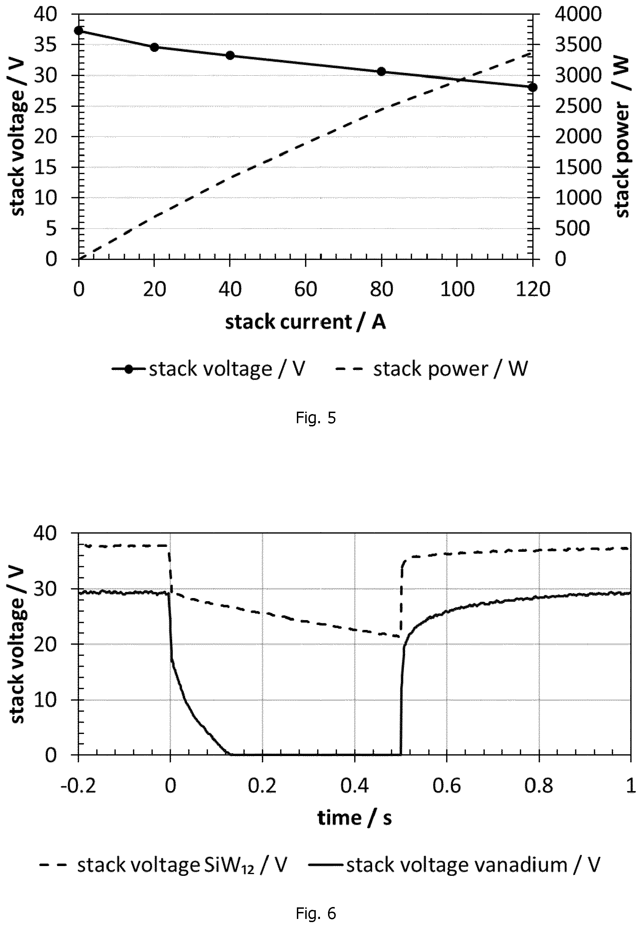

Fig. 5 depicts the current-voltage characteristic and the power-voltage characteristic of a stack of electrochemical cells as shown in Fig. 4. The data obtained were scaled to represent data corresponding to a stack of 30 cells, wherein each cell has an active surface of 400 cm$^2$. As in Fig. 4, the depicted results are IR corrected so as to highlight the behaviour of the POMs irrespective of cell design and stack construction. As may be taken from the diagram in Fig. 5, a level of efficiency of nearly 80 % results at a current of 120 A and a power of 3.4 kW.

Fig. 6 is a diagram showing the evolution of voltage over time with an instantaneous load change for the same stack of electrochemical cells according to the present invention vs. a hybrid flow cell with a single electron transfer redox active species according to the prior art. A current pulse of 80 A (during 0.5 s, resolution in the area of 10 $\mu$s) is applied. The voltage drops to a minimum of 60% of the initial open-circuit voltage. This means that the battery may provide high power for $\mu$s to s. In contrast thereto, a hybrid flow cell using a single electron transfer redox active species exhibits no voltage after 130 $\mu$s, i.e. the stack experiences a complete breakdown of electricity generation. The relevant difference between the two systems resides in the much faster kinetics of the redox reaction involving the POM in contrast to Vanadium. Following the initial discharge of the double layer capacitance of the electrode, which is comparable for both systems, the current of the Vanadium based hybrid flow cell according to the prior art cannot be maintained due to the much slower kinetics of the Vanadium based redox reaction.

This illustrates the suitability of cells according to the present invention in applications such as peak-shaving, uninterrupted power supply (UPS) applications, etc.

The multiple electron transfer ability of POMs may further be used to achieve comparable or even higher gravimetric and volumetric energy densities and higher gravimetric and volumetric power densities as compared to a 85 kWh lithium battery as used in a commercially available car (Tesla® Model S®).

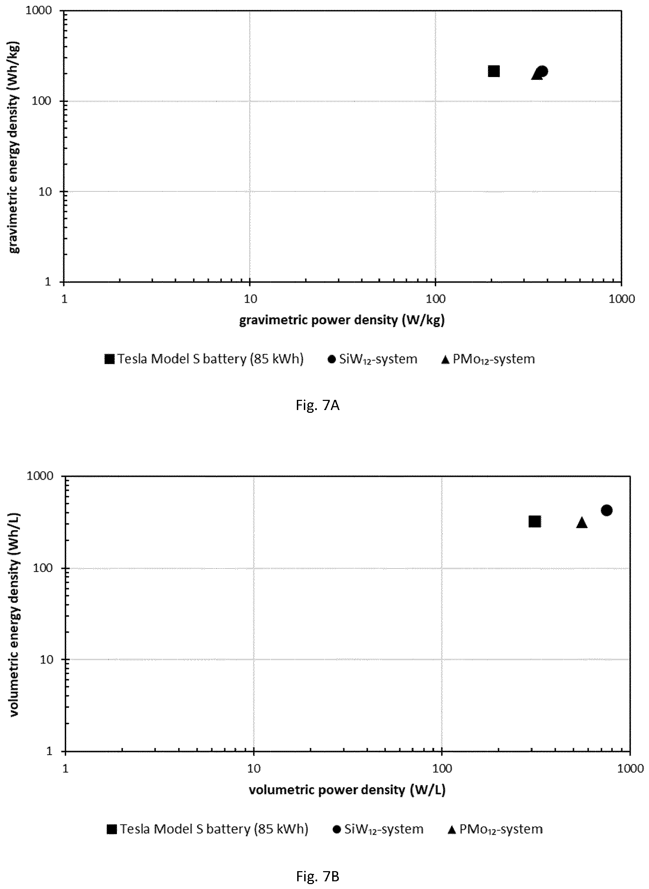

The comparison has been carried out based on calculations explained in more detail in example 3 below. As may be taken from Fig. 7A, the gravimetric energy density expressed in Wh/kg of two different POM-based batteries according to the invention is comparable to that of the aforementioned 85 kWh battery, while the gravimetric power density of batteries according to the present invention (expressed in W/kg) can clearly be higher.

The volumetric energy densities (expressed in Wh/L) can be comparable or higher, and the volumetric power density can clearly be higher in systems according to the present invention as may be taken from the Ragone plot in Fig. 7B.

Examples

Example 1A: Half-cell comprising a POM as redox active species

For a half-cell experiment, a negolyte solution was prepared containing 5 mM $H_4SiW_{12}O_{40}$ (redox active species, in the following referred to as "$SiW_{12}$") and 1 M NaCl as supporting electrolyte. Using bulk electrolysis, $SiW_{12}$ was pre-reduced by two electrons per molecule:

$$\left[SiW_{12}^{VI}O_{40}\right]^{4-} + 2\,e^{-} \;\rightleftharpoons\; \left[SiW_2^{V}W_{10}^{VI}O_{40}\right]^{6-}$$

The potential of the half-cell was determined by means of a three-electrode setup. The working electrode (WE) consisted of a 1 cm x 1 cm piece of carbon felt (Sigracell GFD 4.6, heat treated at 600 °C for 3 h in air), connected by a gold wire. Ag/AgCl was used as a reference electrode (RE) and the counter electrode (CE) comprised a platinum wire in 1M NaCl, separated from the main compartment by a Nafion 117 membrane. Galvanostatic pulses of different current densities (with respect to the 1 cm$^2$ of carbon felt used as WE) were applied to the WE and the resulting potential jumps recorded, as shown in Fig. 3.

The following table 3 lists the potential response measured in the stable region, 30 $\mu$s after the start of the respective pulses. Current density j is given in column 1, measured potential response in column 2. The Ohmic resistance of the system was determined by potentiostatic impedance spectroscopy to be 0.87 $\Omega$. The potential jump was recalculated for the Standard Hydrogen Electrode-scale (SHE-scale) (table 3, column 3) and the Ohmic drop was corrected for (table 3, column 4). Table 3 thus shows the functionality of the redox process independent of specific construction designs of a stack in a half-cell comprising a negolyte containing a POM (here $SiW_{12}$) as redox active species.

Table 3: Potential response to galvanostatic pulses shown in Fig. 3, recorded 30 $\mu$s after start of each pulse.

| j (mA/cm$^2$) | U (V vs. RE (Ag/AgCl)) | U (V vs. SHE) | IR-corrected potential (V vs. SHE) |
|---|---|---|---|
| 0 | -0.50 | -0.28 | -0.28 |
| 50 | -0.41 | -0.19 | -0.23 |
| 100 | -0.33 | -0.11 | -0.20 |
| 200 | -0.15 | 0.07 | -0.11 |
| 300 | 0.03 | 0.25 | -0.01 |

The results so obtained form the basis for the extrapolation used in the following example 1B.

Example 1B: Simulation of a Cell according to the invention

The results obtained in example 1A together with literature data were used to simulate an electrochemical cell as claimed.

To this aim, an extrapolation was made so as to arrive at a negative half-cell with 50 mM $SiW_{12}$. In order to extrapolate from 5 mM $SiW_{12}$ to 50 mM $SiW_{12}$, the potential drop was assumed to decrease gradually by 4 mV per 10 $mA/cm^2$, i.e. the potential drop is 120 mV smaller at a current density of 300 $mA/cm^2$ of active electrode area.

For a positive half-cell, literature data for a $H_2$/Air with a Pt/C catalyst was used, specifically data from Fig. 2 in Nat Commun. 2015, 6(1), 7343. https://doi.org/10.1038/ncomms8343. In order to simulate a cell based on $SiW_{12}$ in the negative half-cell and oxygen reduction on the positive half-cell, the negative half-cell potential of the literature data was assumed to be 0 V vs. SHE and to not change with current density. Using this data and the extrapolated 50 mM $SiW_{12}$ data, the cell voltage was calculated for various current densities. Fig. 4 shows the simulated performance of such a cell as a voltage-current density curve and corresponding power density-current density curve.

Example 1C: Battery consisting of a stack of electrochemical cells according to the invention

Based on the results obtained in example 1B, and assuming a cell stack of 30 cells with an active area of 20 cm x 20 cm, a voltage-current curve and power-current curve for that stack was calculated as shown in Fig. 5. As may be taken from Fig. 5, the reduction in stack voltage with increasing current is relatively small, resulting in high efficiency and high power capability of the battery. Figure 4 shows that even at a relatively high current density of 300 mA/ $cm^2$, the voltage drops by only about 25% compared to the open circuit voltage.

Example 2: Time dependendant potential response

Using the half-cell of example 1A, current pulses of 0.5 seconds at 200 $mA/cm^2$ were applied and the respective potential response recorded. In addition to the measurements using a 5 mM $SiW_{12}$ solution (pre-reduced by two electrons per molecule as described in example 1A), a 5 mM $V^{2+}$ solution was prepared and measured for comparison with the following reaction occurring during the oxidising current pulse:

$$V^{2+} \rightleftharpoons V^{3+} + e^-$$

In the case of vanadium, 1 M $H_2SO_4$ was used as the supporting electrolyte and a mercury sulphate electrode (MSE) in 1M $H_2SO_4$ was used as the reference electrode. The results of both solutions were corrected for the Ohmic drop, recalculated to the SHE-scale, and then extrapolated to 50 mM solutions by assuming a 120 mV smaller potential drop per current decade as above in example 1B. Positive half-cell data was extracted from literature as described in example 1B, assuming 0.963 V vs. SHE at 0 mA, 0.835 V at 200 $mA/cm^2$ and no delay in potential adjustment upon applying a current pulse.

Fig. 6 shows the thus yielded data calculated for the same stack as discussed in example 1C in comparison to data calculated for a corresponding stack using $V^{2+}$ as redox active species. This simulation experiment illustrates that $SiW_{12}$ in this setup is capable of supplying a current density of 200 $mA/cm^2$ of active electrode area with only a limited potential drop over the total current pulse, superior when compared with the same concentration of vanadium. The cell voltage in the case of vanadium breaks down completely after only 130 ms.

Example 3: Comparison by Calculation

For comparison, the 85 kWh battery of a Tesla® Model S® was used. The "85 kWh battery" referred to in this example, in Fig. 7A and 7B as well as in the specification is intended to designate this battery. Based on publicly available data, this 85 kWh battery contains 16 modules respectively weighing 55 lbs or 25 kg each (resulting in gravimetric energy density of 0.21 kWh/kg) and with a respective volume of reportedly 16.45 L (resulting in a volumetric energy density of 0.32 kWh/L). It is noted that the full battery pack (i.e. including housing, battery management system, protection etc.) weighs more (reportedly some 600 kg according to one source).

POMs are capable of multiple electron transfers with up to 20 electrons or more. This capability may result in comparably high gravimetric and volumetric energy densities. Applicant has calculated corresponding figures for two distinct negolytes 1 and 2 in accordance with details given in the following table 4:

Table 4: POM solutions / negolytes 1 and 2

| negolyte / POM solution | redox active species | POM concentration | e⁻ transfers / molecule | average potential (AP) vs. SHE |
|---|---|---|---|---|
| 1 | $[SiW_{12}O_{40}]^{4-}$ ("$SiW_{12}$") | 0.5 M | 20 | -0.95 V |
| 2 | $[PMo_{12}O_{40}]^{3-}$ ("$PMo_{12}$") | 0.5 M | 20 | -0.35 V |

The thermodynamic potential at 25 °C, 1M $H^+$, 0.21 atm oxygen partial pressure for the positive electrode is 1.219 V vs. a Standard Hydrogen Electrode (SHE). The resulting average potential difference between the negative and the positive electrode amounts accordingly to 2.17 V for negolyte 1 and to 1.57 V for negolyte 2.

The volumetric energy density can be calculated as follows:

$$\text{Volumetric energy density} = \text{POM concentration} \times n \times F \times AP$$

wherein the POM concentration is expressed in mol/L, $F$ is the Faraday constant (96485 As/mol or amount of electric charge carried by 1 mol of electrons), n is the number of electrons exchanged and AP is the average voltage.

The gravimetric energy density depends on the density of the negolyte solution. 1 L of a neutralised 0.5 M $SiW_{12}$ solution (negolyte 1) contains approximately 1.625 kg $SiW_{12}$, 0.5 kg water and 0.08 kg NaOH, i.e. the density is approximately 2.2 kg/L. Due to the lower weight of molybdenum compared to tungsten, the density of negolyte 2 is approximately 1.6 kg/L. In both cases, the resulting gravimetric energy density of the electrolyte alone corresponds to about 0.26 kWh/kg.

To match the energy content of the 85 kWh battery, about 146 L or 322 kg of negolyte 1 would be required. Volume-wise this is less than the 85 kWh battery (the 16 battery modules of the 85 kWh battery have a combined volume of 263 L, including module housing but excluding all other housing, protection and power conversion units). Weight-wise, the 16 battery modules of the 85 kWh battery have a combined weight of 400 kg. To match the energy content of the 85 kWh battery , ca. 202 L of negolyte 2 would be required, weighing around 323 kg.

A complete system comparison must take into account further parameters, namely

(i) for the 85 kWh battery:

- power at the rated maximum continuous current of 225A at the nominal voltage of 22.8 V per module (16 x 22.8 V= 365 V total): 82 kW;

(ii) for the negolyte 1 and 2 systems:

- State of the art FC stacks achieve around 6 kW/L peak power density. This, however, is based on an OCV of around 1V, operated presumably at approximately 70 % of the OCV. Assuming average potential differences for the case of negolyte 1 (2.17 V) and negolyte 2 (1.57 V) with the operating point also being 70% of the average potential difference, this power density would increase to approximately 12 kW/L and 9 kW/L, respectively;

(iia) for the negolyte 1 system:

- at 12 kW/L, a 150 kW/85kWh system would consist of a 13L stack and 146 L of negolyte 1 plus tubing, pumps, Battery Management System (BMS), etc. In the case of a combined volume of 200 L, the overall energy density of the system would amount to 0.43 kWh/L, which is higher than that of the 85 kWh battery;
- assuming 322 kg for the solution, 14 kg for the stack, 25 kg for the pumps and 41 kg for tanks, BMS, pipes, etc., the whole system would weigh around 400 kg (375 W/kg, 213 Wh/kg);

(iib) for the negolyte 2 system:

- at 9 kW/L, a 150 kW/85kWh system would consist of a 17 L stack and 202 L of negolyte 2 plus tubing, pumps, BMS, etc. In the case of a combined volume of 270 L, the overall energy density of the system would amount to 0.31 kWh/L, which is comparable to that of the 85 kWh battery;

- assuming 323 kg for the solution, 18 kg for the stack, 34 kg for the pumps and 50 kg for tanks, BMS, pipes, etc., the whole system would weigh around 425 kg (353 W/kg, 200 Wh/kg).

From the data above, using the weight of 400 kg for the 16 modules alone and a volume of 263 L , the 85 kWh battery has a power density of 205 W/kg (312 W/L) and an energy density of 213 Wh/kg (323 Wh/L). It should be noted that these power densities are based on the rated continuous power for the 16-module arrangement of 82 kW. Table 5 shows this data in comparison the data for the POM-systems calculated as described above.

Table 5: Energy and power densities of battery systems

| POM system / negolyte or battery | gravimetric energy density / kWh/kg | volumetric energy density / kWh/L | gravimetric power density / kW/kg | volumetric power density / kW/L |
|---|---|---|---|---|
| 1 | 0.21 | 0.43 | 0.38 | 0.75 |
| 2 | 0.20 | 0.31 | 0.35 | 0.56 |
| 85 kWh battery | 0.21 | 0.32 | 0.21 | 0.31 |

Gravimetric and volumetric energy densities may also be taken from the Ragone Plots in Fig. 7A and 7B, which graphically illustrate the values given in preceding table 5 (cf. Fig. 7A for a comparison of gravimetric energy and power densities and Fig. 7B for a comparison of volumetric energy and power densities; "SiW$_{12}$-system" denotes a battery equipped with negolyte 1 of present example 3; "PMo$_{12}$"-system denotes a battery equipped with negolyte 2 of present example 3).

List of reference numerals

| | |
|---|---|
| 1 | negative half-cell |
| 2 | positive half-cell |
| 3 | redox electrolyte |
| 3A | negolyte |
| 3B | posolyte |
| 4 | proton exchange membrane |
| 5 | negative electrode |
| 6 | positive electrode |
| 7 | inlet |
| 8 | outlet |
| 9 | storage tank |
| 10 | conduit |
| 11 | pump |

**Claims**

1. Electrochemical cell for electrical energy storage (EES),

which is capable of operating in an electrical energy delivery mode in which it generates electrical energy by oxidation of a redox active species and reduction of oxygen in an oxygen reduction reaction (ORR) and/or in an electrical energy storage mode in which it consumes electrical energy to reduce a redox active species and generates oxygen in an oxygen evolution reaction (OER), and
which is a hybrid redox flow cell comprising
a negative half-cell (1),

a positive half-cell (2),
a negolyte (3A) with a polyoxometalate (POM) as redox active species in the negative half-cell (1),
an ion exchange membrane (4) disposed between the negative half-cell (1) and the positive half-cell (2),
a negative electrode (5) in the negative half-cell (1),
a positive electrode (6) in the positive half-cell (2),
**characterised in that**
the polyoxometalate (POM) is capable of multiple electron transfer, and **in that**
the positive electrode (6) is equipped with an oxygen reduction reaction (ORR) and/or oxygen evolution reaction (OER) catalyst.

2. Electrochemical cell according to claim 1,

   which is capable of operating in an electrical energy delivery mode in which it generates electrical energy by oxidation of a redox active species and reduction of oxygen in an oxygen reduction reaction (ORR), and
   which is **characterised in that** the positive electrode (6) is equipped an oxygen reduction reaction or ORR catalyst.

3. Electrochemical cell according to claim 1,

   which is capable of operating in an electrical energy storage mode in which it consumes electrical energy to reduce a redox active species and generates oxygen in an oxygen evolution reaction (OER), and
   which is **characterised in that** the positive electrode (6) is equipped with an oxygen evolution reaction or OER catalyst.

4. Electrochemical cell according to claim 1,

   which is capable of operating in an electrical delivery mode in which it generates electrical energy by oxidation of a redox active species and reduction of oxygen in an oxygen reduction reaction (ORR) and in an energy storage mode in which it consumes electrical energy to reduce a redox active species and generates oxygen in an oxygen evolution reaction (OER), and
   which is **characterised in that** the positive electrode (6) is equipped with a bifunctional oxygen reduction reaction (ORR) and oxygen evolution reaction (OER) catalyst.

5. Electrochemical cell according to claim 1,
   wherein the oxygen reduction reaction (ORR) and/or oxygen evolution reaction (OER) catalyst is chosen from among the following: $Pd_3Co/N$-doped reduced graphene oxide, PtCo-nanowires, $Pt/Ti_{0.9}Co_{0.1}N$-nanoparticles, Mn-oxide/glassy carbon, $Co_3O_4/N$-reduced mildly oxidized graphene oxide or preferably from Pt-Ir, $IrO_2$, Ru-Ir, $RuO_2$, $IrO_2$-$RuO_2$ or more preferably from Ir/carbon black, $IrO_2/TiO_2$, Ru/carbon black, Pt/carbon black, $Ir_x(IrO_2)_{10-x}$ $Pt/TiO_2$ and $Ir/TiO_2$.

6. Electrochemical cell according to any one of the preceding claims,
   wherein the polyoxometalate (POM) is capable of transferring 2 to 32, preferably 2 to 24, more preferably 2, 3, 4, 5 or 6 electrons.

7. Electrochemical cell according to any one of the preceding claims,
   wherein the polyoxometalate (POM) is chosen from among $[PMo_{12}O_{40}]^{3-}$, $[PW_{12}O_{40}]^{3-}$, $[SiW_{12}O_{40}]^{4-}$, $[ZnW_{12}O_{40}]^{6-}$, $[H_2W_{12}O_{40}]^{6-}$, $[P_2W_{18}O_{62}]^{6-}$, $[CoW_{12}O_{40}]^{5-}$, $[SiV_3W_9O_{40}]^{7-}$, $[AlO_4Al_6Fe_6(OH)_{24}(OH_2)_{12}]^{7+}$.

8. Electrochemical cell according to any one of the preceding claims, wherein the redox reaction at the negative electrode (5) can be one of the following :

$$[SiV_3W_9O_{40}]^{10-} + 4\ e^- \rightarrow [SiV_3W_9O_{40}]^{14-};$$

$$[CoW_{12}O_{40}]^{6-} + 4\ e^- \rightarrow [CoW_{12}O_{40}]^{10-};$$

$$[PW_{12}O_{40}]^{3-} + 6\ e^- \rightarrow [PW_{12}O_{40}]^{9-};$$

$$[SiW_{12}O_{40}]^{4-} + 18\ e^- \rightarrow [SiW_{12}O_{40}]^{22-};$$

$$[BW_{12}O_{40}]^{5-} + 18\ e^- \rightarrow [BW_{12}O_{40}]^{23-};$$

$$[P_2W_{18}O_{62}]^{6-} + 18\ e^- \rightarrow [P_2W_{18}O_{62}]^{24-};$$

$$[H_2W_{12}O_{40}]^{6-} + 24\ e^- \rightarrow [H_2W_{12}O_{40}]^{30-};$$

$$[PMo_{12}O_{40}]^{3-} + 24\ e^- \rightarrow [PMo_{12}O_{40}]^{27-};\ \text{and}$$

$$[H_2W_{12}O_{40}]^{6-} + 32\ e^- + OH^- \rightarrow [HW_{12}O_{40}]^{39-} + H_2O.$$

9. Electrochemical cell according to any one of the preceding claims, **characterised in that** the negolyte (3A) is an aqueous solution having a pH in the range of from 1.5 to 12, preferably from 6 to 12, most preferably from 7 to 12.

10. Electric Energy Storage (EES) process involving the use of at least one electrochemical cell according to one or more of claims 1 to 9.

11. Electric Energy Storage (EES) process according to claim 11, wherein the negolyte is charged in a cell according to one of claims 3 or 4 and discharged in a cell according to one of claims 2 or 4.

12. Electric Energy Storage (EES) process according to claim 11 or 12, wherein the charged negolyte and/or the discharged negolyte is stored separately from the cell in which it is or has been charged or discharged.

13. Use of a cell according to one or more of claims 1 to 9 in an Electric Energy Storage (EES) System or device.

14. Use of a cell according to one or more of claims 1 to 9 in a stationary, portable or mobile device or application.

15. Stationary, portable or mobile device or application equipped with one or more cells according to any one of claims 1 to 9.

Fig. 1

Fig. 2

Fig. 3

Fig. 4

EP 4 181 239 A1

Fig. 5

Fig. 6

Fig. 7A

Fig. 7B

Europäisches
Patentamt

European
Patent Office

Office européen
des brevets

# EUROPEAN SEARCH REPORT

Application Number

EP 21 20 8274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI LIU ET AL: "Solar-induced direct biomass-to-electricity hybrid fuel cell using polyoxometalates as photocatalyst and charge carrier", NATURE COMMUNICATIONS, vol. 7, 7 February 2014 (2014-02-07), page 1, XP055213631, DOI: 10.1038/ncomms4208 * abstract * * Different POMs used in this hybrid fuel cell; page 7, right-hand column * * Product analysis of starch degradation; page 7, right-hand column * * figure 2 * | 1-15 | INV. H01M4/86 H01M4/90 H01M8/1018 H01M8/18 |
| X | US 2011/014527 A1 (OHLSEN LEROY JAMES [US]) 20 January 2011 (2011-01-20) * abstract * * figures 1, 6, 10-12 * | 1-8, 10-15 | |
| T | WU XING ET AL: "Bifunctional Catalysts for Reversible Oxygen Evolution Reaction and Oxygen Reduction Reaction", CHEMISTRY - A EUROPEAN JOURNAL, vol. 26, no. 18, 18 March 2020 (2020-03-18), pages 3906-3929, XP055912945, DE ISSN: 0947-6539, DOI: 10.1002/chem.201905346 Retrieved from the Internet: URL:https://onlinelibrary.wiley.com/doi/full-xml/10.1002/chem.201905346> * abstract * | | TECHNICAL FIELDS SEARCHED (IPC) H01M |

-/--

The present search report has been drawn up for all claims

| Place of search | Date of completion of the search | Examiner |
|---|---|---|
| The Hague | 20 April 2022 | Rosciano, Fabio |

Europäisches
Patentamt
European
Patent Office
Office européen
des brevets

# EUROPEAN SEARCH REPORT

Application Number

EP 21 20 8274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | KOURASI M ET AL: "Heteropolyacids for fuel cell applications", ELECTROCHIMICA ACTA, ELSEVIER, AMSTERDAM, NL, vol. 127, 17 February 2014 (2014-02-17), pages 454-466, XP028847343, ISSN: 0013-4686, DOI: 10.1016/J.ELECTACTA.2014.02.006 * abstract * | | |
| T | PRATT HARRY D ET AL: "A polyoxometalate flow battery", JOURNAL OF POWER SOURCES, ELSEVIER, AMSTERDAM, NL, vol. 236, 5 March 2013 (2013-03-05), pages 259-264, XP028586822, ISSN: 0378-7753, DOI: 10.1016/J.JPOWSOUR.2013.02.056 * abstract * | | |

TECHNICAL FIELDS
SEARCHED      (IPC)

The present search report has been drawn up for all claims

| Place of search | Date of completion of the search | Examiner |
|---|---|---|
| The Hague | 20 April 2022 | Rosciano, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 8274

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2022

| Patent document cited in search report | | Publication date | Patent family member(s) | | Publication date |
|---|---|---|---|---|---|
| US 2011014527 | A1 | 20-01-2011 | US | 2011014527 A1 | 20-01-2011 |
| | | | US | 2014287330 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0517217 A1
- EP 3432402 A1
- EP 3561932 A1
- EP 3435464 A1
- EP 3439093 A1

### Non-patent literature cited in the description

- **CHAKRABARTI et al.** *ACS Applied Materials & Interfaces,* 2020, vol. 12 (48), 53869-53878
- **H.D. PRATT III et al.** *Journal of Power Sources,* 2013, vol. 236, 259-264
- *J. Am. Chem. Soc.,* 2010, vol. 132 (39), 13612-13614, https://doi.org/10.1021/ja104587v
- *Chemie Ing. Tech.,* 2020, vol. 92 (1-2), 31-39, https://doi.org/10.1002/cite.201900101
- *Nat. Mater.,* 2011, vol. 10 (10), 780-786, https://doi.org/10.1038/nmat3087
- *Sci. Rep.,* 2018, vol. 8 (1), 3591, https://doi.org/10.1038/s41598-018-22001-9
- *Nano Energy,* 2014, vol. 10, 135-143, https://doi.org/10.1016/j.nanoen.2014.09.013
- *J. Power Sources,* 2015, vol. 284, 296-304, https://doi.org/10.1016/j.jpowsour.2015.03.001
- *Renew. Sustain. Energy Rev.,* 2017, vol. 79, 585-599, https://doi.org/10.1016/j.rser.2017.05.112
- *J. Inorg. Nucl. Chem.,* 1976, vol. 38, 807-816
- **JUAN J. BORRÁS-ALMENAR ; E. CORONADO ; ACHIM MÜLLER ; M.T. POPE.** Polyoxometalate Molecular Science. Springer Science & Business Media, 06 December 2012
- **CRONIN et al.** *Nature Chemistry,* 2018, vol. 10, 1042-1047
- *Nat Commun,* 2015, vol. 6 (1), 7343, https://doi.org/10.1038/ncomms8343